# EUROPÄISCHE PATENTSCHRIFT

(11) **EP 2 297 621 B1**
(45) Veröffentlichungstag und Bekanntmachung des Hinweises auf die Patenterteilung: **12.12.2012**
(21) Anmeldenummer: 09776911.1
(22) Anmeldetag: 01.07.2009
(51) Int. Cl.: G05B 19/42

(54) **VERFAHREN UND SYSTEM ZUR APPLIKATION EINES BESCHICHTUNGSMATERIALS MIT EINEM PROGRAMMIERBAREN ROBOTER**
METHOD AND SYSTEM FOR APPLYING A COATING MATERIAL USING A PROGRAMMABLE ROBOT
PROCÉDÉ ET SYSTÈME POUR L'APPLICATION D'UNE MATIÈRE DE REVÊTEMENT AVEC UN ROBOT PROGRAMMABLE

(30) Priorität: 09.07.2008 DE 102008032259
(43) Veröffentlichungstag der Anmeldung: 23.03.2011
(73) Patentinhaber: Dürr Systems GmbH, 74321 Bietigheim-Bissingen (DE)
(72) Erfinder: RADEMACHER, Lothar, 74321 Bietigheim-Bissingen (DE); WOLF, Martin, 71737 Kirchberg an der Murr (DE)
(74) Vertreter: Beier, Ralph
(86) Internationale Anmeldenummer: PCT/EP2009/004760
(87) Internationale Veröffentlichungsnummer: WO 2010/003584

(56) Entgegenhaltungen:
- WO-A1-91/04522
- GB-A- 2 114 024
- JP-A- 60 095 609
- US-A- 5 014 644

## Beschreibung

Die Erfindung betrifft ein Verfahren und ein System zur Applikation eines Beschichtungsmaterials auf Bauteile serienweise zu bearbeitender Werkstücke gemäß dem Oberbegriff der unabhängigen Patentansprüche, beispielsweise zur Applikation eines Dichtungsmaterials auf Türen, Hauben oder andere Anbauteile von Fahrzeugkarossen. Insbesondere kann es sich um die Applikation von Bahnen zum Abdichten von Bereichen wie z. B. Bördelfalzen der Anbauteile handeln, die von außen nicht sichtbar sind, wenn sich das Anbauteil in seiner geschlossenen Position in oder an dem Werkstück befindet.

Zur Erhöhung des Automatisierungsgrads bei der Beschichtung von Werkstücken wie Fahrzeugkarossen sollen Roboter zunehmend auch für Beschichtungsvorgänge eingesetzt werden, die bisher nur manuell durchgeführt werden konnten. Ein Beispiel für solche Prozesse ist das Abdichten von Nähten oder Falzen an Stellen der Karosse, die später bei dem fertigen Fahrzeug für dessen Nutzer sichtbar sind und für die deshalb hohe Ansprüche nicht nur an die Abdichtungsfunktion, sondern auch an das optische Erscheinungsbild gestellt werden müssen.

Hierbei tritt aber das Problem auf, dass ein Teil dieser Abdichtprozesse an Fahrzeugbereichen durchgeführt werden muss, die nicht ohne Probleme zugänglich sind. Dazu gehört beispielsweise das Abdichten von Bördelfalzen an Fahrzeugtüren. Diese Falze liegen auf der Innenseite der Türen und sollen in Serienbetrieb bei geschlossenen Türen beschichtet werden, um hierbei einen zusätzlichen Aufwand des Öffnens und Schließens der Tür zu vermeiden. Deshalb soll auch die Programmierung nicht bei geöffneter Tür erfolgen. Das hat zur Folge, dass die Programmierung der Applikationsbahnen sehr aufwendig und schwierig ist, weil der Programmierer beim Abfahren der an der Innenseite der geschlossenen Tür unsichtbaren Bördelnaht die genaue Stellung der Applikationsdüse relativ zu der zu beschichtenden Fläche nicht sehen kann. Es muss quasi "blind" programmiert werden.

Zum Applizieren einer Abdichtmasse auf eine Bördelnaht von geschlossenen Türen oder anderen Anbauteilen von Fahrzeugkarossen geeignete Applikationswerkzeuge und entsprechende Verfahren wurden in DE 10 2007 037 865 B3 vorgeschlagen, deren gesamte Offenbarung hiermit in die vorliegende Anmeldung einbezogen wird.

Eine Möglichkeit, den Programmierprozess zu vereinfachen, wäre die sogenannte Offline-Programmierung an einem vom Roboter unabhängigen Rechner. Dabei kann auf der Basis vorhandener Daten des jeweiligen Fahrzeugteils und der Roboterzelle eine Bewegungsbahn des Roboters am Rechner erstellt und ggf. mit den erforderlichen Applikationsparametern kombiniert werden. Diese Programme können dann an den Roboter übertragen werden, der nach entsprechender Einmessung des Werkstücks die Applikation vornehmen kann. Diese Vorgehensweise hat aber bei der Applikation von Abdichtungsbahnen das Problem zu großer Toleranzketten, die dazu führen, dass zumindest die Ansprüche an die optische Erscheinung der Dichtnaht in der Regel nicht erfüllt werden können. Im ungünstigsten Fall kommt es auch zu unerwünschten Kollisionen zwischen dem Applikator bzw. der Applikationsdüse und dem zu beschichtenden Bauteil. Dann ist ein Nachteachen der gesamten Applikationsabläufe erforderlich.

In der Praxis kann die Programmierung derzeit nur iterativ erfolgen: Nach einer ersten Programmierung wird zunächst probeweise appliziert und das Applikationsbild nach Öffnen des zu beschichtenden Anbauteils begutachtet. Es wird versucht, aus dem optischen Erscheinungsbild der Applikation Rückschlüsse zu ziehen auf die zu optimierenden Parameter, bei denen es sich sowohl um Bewegungsparameter des Roboters als auch um Applikationsparameter handeln kann. Auf dieser Basis werden entsprechende Modifikationen am Applikationsprogramm vorgenommen und eine erneute Applikation bei geschlossenem Bauteil durchgeführt. Sodann erfolgt der nächste Iterationsschritt. Das Iterationsverfahren wird solange fortgesetzt, bis die Applikation zufriedenstellend ist. Diese Methode ist unerwünscht arbeits- und zeitaufwendig.

GB 2 114 024 A offenbart das Lackieren von Fahrzeugkarossen einschließlich der Innenseite der Fahrzeugtüren mit einem Roboter, dessen Besonderheit darin besteht, dass er selbst die auf der Innenseite zu lackierende Fahrzeugtür öffnet und schließt. Die Programmierung des Roboters erfolgt nach dem Teach-Verfahren in konventioneller Weise.

Aus JP 60 095609 A ist es bekannt, bei gegossenen Werkstücken verbleibende Eingusselemente mit einem Roboter zu entfernen. Zum Programmieren des Roboters im Teach-Verfahren wird ein entsprechendes Werkstück in mehrere Einzelblöcke unterteilt, die getrennt und entfernt von den jeweils anderen Einzelblöcken manuell abgetastet werden.

Aus WO 91/04522 A1 ist ein Verfahren zum Steuern der Bewegungen eines Bearbeitungsroboters und eines das zu bearbeitende Werkstück tragenden Drehtisches beim Teachen der Roboterbahn bekannt, wobei das Risiko von Kollisionen des Roboters mit dem Drehtisch vermieden werden soll.

Aus US 5 014 644 A ist eine Beschichtungsanlage für Fahrzeugkarossen bekannt, in der u.a. Roboter zum Lackieren der Innenseiten der Fahrzeugtüren vorgesehen sind.

US 6 158 701 A offenbart ein einstellbares Lackiergestell, auf dem einzelne Teile von Fahrzeugkarossen beispielsweise zu Reparaturzwecken lackiert werden sollen.

US 5 732 194 A offenbart einen relativ zu einem Bezugsgegenstand durch Rechnersteuerung mit CAD-Daten rekonfigurabel einstellbaren Haltemechanismus für Teile, die bearbeitet, montiert oder inspiziert werden sollen.

Der Erfindung liegt die Aufgabe zugrunde, ein Verfahren und ein System der eingangs genannten Gattung anzugeben, die im Vergleich mit dem Stand der Technik eine wesentlich einfachere und genauere Programmierung des Roboters für die Beschichtung von Bauteilbereichen ermöglichen, die während der normalen Serienbeschichtung nicht von außen sichtbar sind.

Diese Aufgabe wird durch die Merkmale der Patentansprüche gelöst.

Die Erfindung beruht auf der Erkenntnis, dass die Programmierung des Roboters für die Beschichtung von schwierigen Bauteilbereichen wie beispielsweise der Bördelfalze von Fahrzeugtüren od. dgl. wesentlich schneller, einfacher und genauer durchgeführt werden kann, wenn das Bauteil hierbei nicht in das zugehörige Werkstück eingebaut, sondern abmontiert und vollständig von ihm entfernt ist. Insbesondere basiert die Erfindung auf dem bevorzugten Einsatz eines Teach- oder Programmiergestells. Dieses Gestell kann das betreffende Anbauteil beispielsweise einer Karosse aufnehmen, das dann an dem Gestell von allen erforderlichen Seiten frei zugänglich ist, wobei die Applikationsdüse und die zu beschichtende Oberfläche für den Programmierer vollständig sichtbar sind. Dadurch fallen auch Beobachtungen und Analyse der jeweiligen Einflussparameter auf die Applikationsqualität wesentlich leichter, und eine Optimierung der Applikation kann wesentlich schneller und effektiver vorgenommen werden als bei den bisher üblichen Methoden.

Die Online-Programmierung der Applikationsbahn an dem auf dem Programmiergestell angeordneten Bauteil kann vorzugsweise nach einem der allgemein bekannten Teach-In-Verfahren durchgeführt werden, bei dem der Programmierer den Roboter mit einer Steuerkonsole punktweise oder kontinuierlich in die gewünschte Position steuert. Eine andere Möglichkeit der Online-Programmierung wäre das sogenannte Playback-Verfahren, bei dem der Programmierer die vorgesehene Applikationsbahn durch direktes Führen des Applikationswerkzeugs abfährt.

Das Programmier- oder Teachgestell kann aber auch in Kombination mit einer Offline-Programmierung kombiniert werden, wie sie weiter oben beschrieben wurde. Die offline erstellten Applikationsprogramme können vorteilhaft an dem an das Teachgestell angebauten Bauteil abgefahren und hierbei optimiert werden.

In der Praxis wurde festgestellt, dass sich durch Einsatz des Programmiergestells der Programmieraufwand hinsichtlich Zeit und Kosten um den Faktor 5 reduzieren lässt und hierbei die Applikationsqualität der Serienbeschichtung nicht etwa schlechter wird als bisher, sondern sogar noch verbessert wird.

Ebenso einfach und problemlos können die bei dieser Programmierung erzeugten Steuerprogramme auf die Steuerung der Serienbeschichtung der in oder an die zugehörigen Werkstücke ein- oder angebauten Bauteile übertragen werden.

An dem nachfolgend beschriebenen Ausführungsbeispiel wird die Erfindung näher erläutert. In der Zeichnung zeigen
- Fig. 1: einen für die Applikation von Nahtabdichtmaterial und für die hier beschriebene Erfindung geeigneten Beschichtungsroboter;
- Fig. 2: ein verwendbares Applikationswerkzeug des Roboters nach Fig. 1;
- Fig. 3: ein in manchen Fällen bevorzugtes anderes Applikationswerkzeug für den Roboter; und
- Fig. 4: ein erfindungsgemäßes Teachgestell.

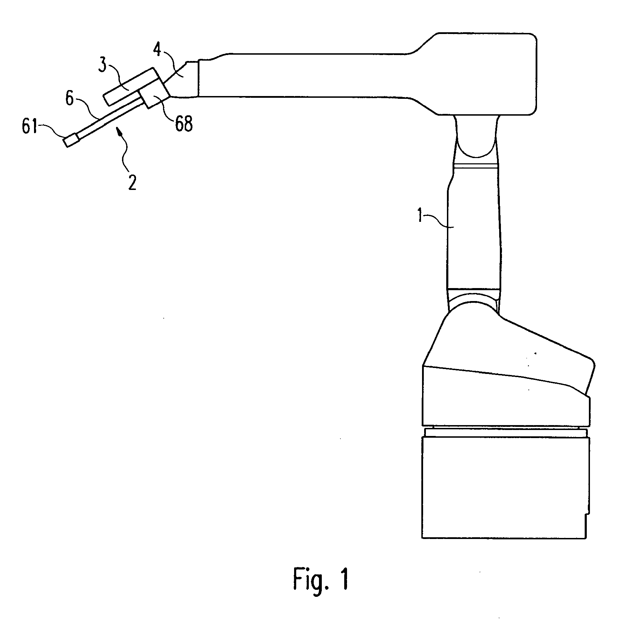

Der in Fig. 1 schematisch dargestellte, beispielsweise 6-achsige Beschichtungsroboter 1 trägt an seinem bei diesem Beispiel 3-achsigen Handgelenk 4 einen Applikator 2 mit dem für Applikationen von Abdichtmaterial (Sealing) typischen langgestreckten, z. B. rohrförmigen Lanzenteil 6, an dessen äußerem Ende sich die Düsenanordnung 61 mit mindestens einer Applikationsdüse befindet. Insoweit kann der Roboter 1 dem allgemein bekannten Stand der Technik entsprechen.

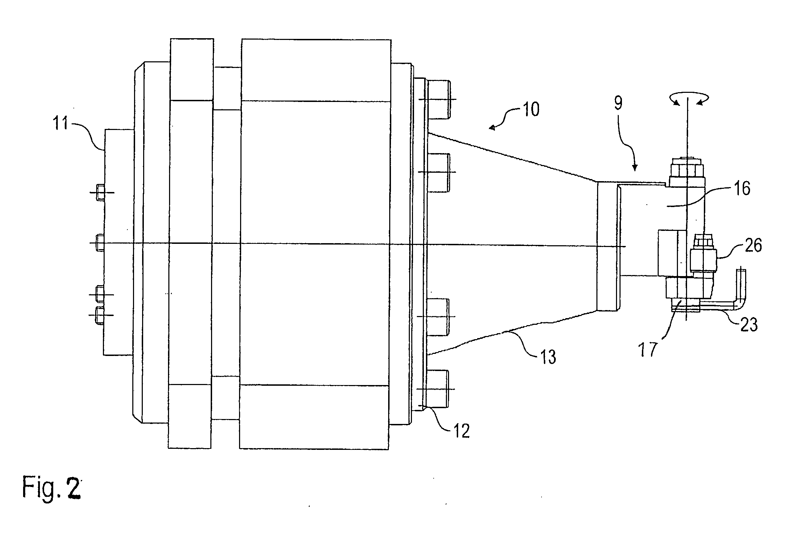

Die Düsenanordnung 61 des Applikators 2 kann aber durch das in Fig. 2 dargestellte Applikationswerkzeug 9 mit einer Toleranzausgleichsvorrichtung 10 gebildet sein, wie es in der eingangs erwähnten DE 10 2007 037 865 B3 beschrieben ist. Demgemäß hat die Toleranzausgleichsvorrichtung 10 einen Flansch 11 zur Befestigung an dem Lanzenteil 6 und einen weiteren Flansch 12, an dem über das konische Verbindungsstück 13 das Applikationswerkzeug 9 befestigt ist. Die Toleranzausgleichsvorrichtung 10 ermöglicht dreidimensionale Ausgleichsbewegungen des Befestigungsflansches 12 und damit des kompletten Applikationswerkzeugs 9 relativ zu dem roboterseitigen Befestigungsflansch 11, um die Anforderungen an die Positionierungsgenauigkeit des verwendeten Roboters herabsetzen zu können. Das Applikationswerkzeug 9 hat einen Materialsteg 16, der eine drehbare Lagerung für eine Andrückwippe 17 bildet, in der zwei Andrückrollen 26 gelagert sind, die bei der Serienbeschichtung auf einer Vorderseite des abzudichtenden Bauteils abrollen können. Durch diesen Rollenkontakt wird erreicht, dass die darstellungsgemäß rechtwinklig gebogene Düse 23 in einer vorgegebenen Position an einer Rückseite der abzudichtenden Bördelnaht gehalten wird, um die Dichtmasse sauber und genau applizieren zu können.

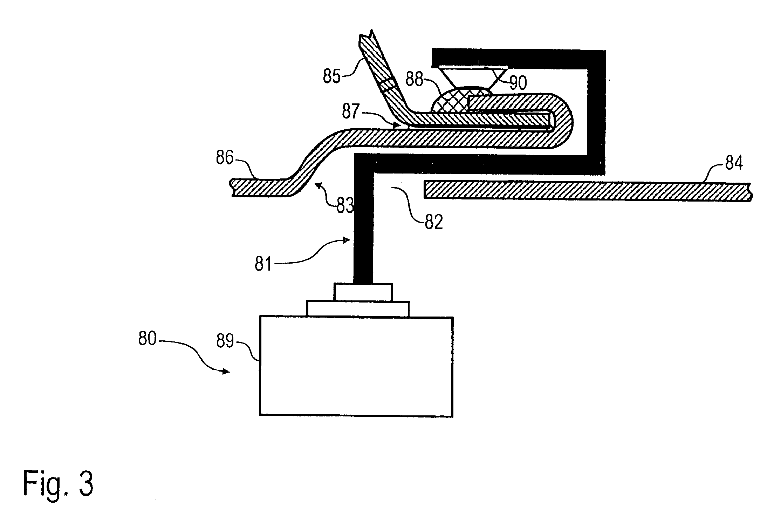

Die Düsenanordnung 61 des Roboters kann auch durch das in Fig. 3 dargestellte Applikationswerkzeug 80 gebildet sein, wie es in der Patentanmeldung DE 10 2008 027 994.3 beschrieben ist, und das durch einen beispielsweise rohrförmigen mehrfach, beispielsweise darstellungsgemäß doppelt L-förmig oder annähernd S-förmig gebogenen Düsenträger 81 gekennzeichnet ist. Fig. 3 zeigt den Bereich eines Spalts 82 zwischen einer Kraftfahrzeugtür 83 und einem Kotflügel 84, wobei die Kraftfahrzeugtür in dem in der Zeichnung dargestellten geschlossenen Zustand mit dem Kotflügel überlappt. Die Tür 83 weist ein Innenblech 85 und eine um eine angewinkelte Kante des Innenblechs herumgebördelte Blechbeplankung 86 auf. Im Bereich der angewinkelten Kante ist das Innenblech 85 durch eine Klebeschicht 87 mit der Blechbeplankung 86 verbunden. Bei diesem Aufbau besteht die Gefahr, dass im Bereich der Bördelnaht Feuchtigkeit in den Spalt zwischen der angewinkelten Kante des Innenblechs und der herumgebördelten Kante der Blechbeplankung eintritt und Korrosion verursacht. Die Bördelnaht zwischen dem Innenblech und der Blechbeplankung ist deshalb mit einer sich über die gesamte Länge der Bördelnaht erstreckenden Dichtmasse 88 versiegelt, um das Eindringen von Feuchtigkeit in die Bördelnaht zu verhindern. Die Applikation der Dichtmasse erfolgt hierbei durch das Applikationswerkzeug 80, das durch den Spalt 82 zwischen der Kraftfahrzeugtür 83 und dem Kotflügel 84 hindurchragt, wie in der erwähnten Patentanmeldung detailliert erläutert ist. Der dargestellte Düsenträger 81 ermöglicht es generell, die von dem Düsenträger geführte Düse 90 durch einen Spalt zwischen überlappenden Bauteilen hindurch auf der Rückseite der Bauteile zu positionieren, um dort Beschichtungsmittel zu applizieren. Das Applikationswerkzeug 80 weist zur Montage an dem Roboter einen Anschlussflansch 89 auf. Auch das Applikationswerkzeug 80 kann nachgiebig an einer Toleranzausgleichsvorrichtung gemäß DE 10 2007 037 865 B3 angeordnet sein.

Mit einem derartigen Applikationswerkzeug 9 oder 80 des bei der Serienbeschichtung verwendeten Beschichtungsroboters 1 kann auch die nachfolgend beschriebene Programmierung der Applikationsbahn für die Bördelnaht durchgeführt werden, doch ist die Realisierung der Erfindung nicht auf diese Applikationswerkzeuge beschränkt.

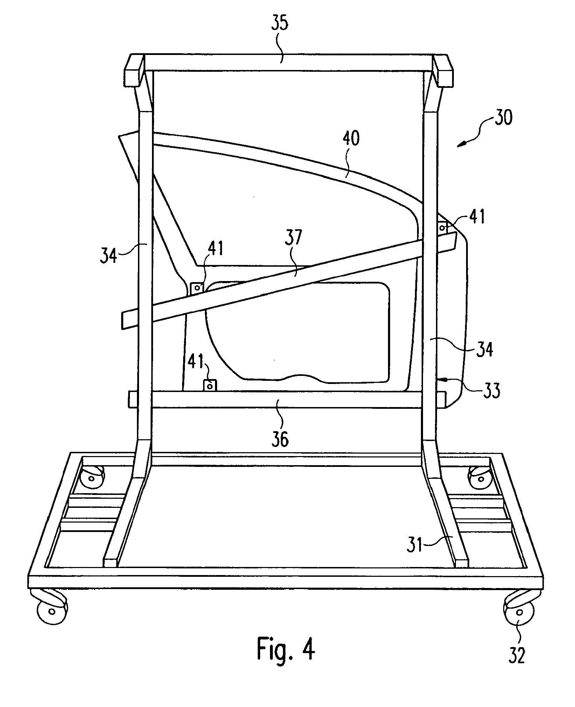

Für die Programmierung beispielsweise der zum Abdichten der Bördelnaht einer Fahrzeugtür zu applizierenden Bahnen kann das in Fig. 4 mehr oder weniger schematisch dargestellte Programmier- oder Teachgestell verwendet werden. Demgemäß kann das Gestell 30 einen horizontalen Bodenrahmen 31 haben, der darstellungsgemäß auf Wagenrollen 32 oder auf einem nicht dargestellten stabilen Unterbau verfahrbar sein und mit nicht dargestellten Bremseinrichtungen arretiert werden kann. Auf dem Bodenrahmen 31 ist ein vertikales Traggerüst 33 mit voneinander beabstandeten vertikalen Stützen 34 befestigt, die am oberen Ende durch eine horizontale Querstange 35 verbunden sind. Ferner kann das Traggerüst 33 darstellungsgemäß zwei in unterschiedlicher Höhe angeordnete Querstreben 36 und 37 besitzen, die als bewegbare Halterungen für die Fahrzeugtür 40 dienen. Die Tür 40 wird unter Einhaltung eines für den betrachteten Zweck ausreichenden horizontalen Abstands von dem Traggerüst 33 z. B. mit Gewindestangen oder sonstigen dem Fachmann zur Verfügung stehenden Abstandshalterungen 41 an den beiden Querstreben 36 und 37 befestigt. Die Befestigungspunkte an der Tür 40 können sich beispielsweise etwa an den Stellen befinden, an denen die Tür in der Karosse gehalten wird, oder aber an anderen geeigneten Befestigungsstellen der Tür.

Zum Einstellen der Position und Orientierung der Tür 40 vorzugsweise entsprechend ihrer Einbaulage in der Karosse bei der Serienbeschichtung und zur Anpassung an unterschiedliche Karossen- und Türformen können die Querstreben 36 und 37 an den Stützen 34 und/oder die Gewindestangen oder Abstandshalterungen 41 an den Querstreben 36, 37 stufenlos verstellbar sein. Zu diesem Zweck können die Stützen 34 und/oder Querstreben 36, 37 mit geeigneten Linearführungen, Laufschienen (z. B. Helm-Schienen), C-Schienen od. dgl. versehen oder entsprechend ausgebildet sein. Zum Verstellen der Türposition in der Vertikalebene und/oder horizontal in Richtung der Gewindestangen oder sonstigen Abstandshalterungen 41 können (nicht dargestellte) automatisch steuerbare elektrische oder sonstige Servoantriebssysteme vorgesehen sein. Die Positionsstteuerung dieser Servoantriebe kann mittels Daten erfolgen, die aus den CAD-Daten der jeweiligen Karosse entnommen werden können. Hierbei können gespeicherte dreidimensionale Daten genutzt werden, die die Aufnahme- oder Befestigungspunkte des Anbauteils im Werkstück angeben, also z. B. der Scharniere der Fahrzeugtür.

Das Gestell 30 kann über Maßstabeinrichtungen verfügen, die eine reproduzierbare Einstellung der angebauten Tür in den drei kartesischen Koordinaten und den zugehörigen drei Rotationswinkeln erleichtern. Ferner kann das Gestell 30 Referenzmarken haben, mit denen die Position und Orientierung im Bezug zu dem Roboter eingemessen werden kann, wobei als Messsystem das an den Roboter angebaute Sensorgerät 3 (Fig. 1) dienen kann. Ferner kann das Gestell über Schnellspannverschlüsse verfügen, mit denen ein schnelles An- und Abbauen der Tür ermöglicht wird.

Das beschriebene Gestell kann beliebig abgewandelt werden, u. a. auch zur Anpassung an andere Anbauteile, doch sollen für den betrachteten Zweck einige Bedingungen eingehalten werden. So soll das Gestell so ausgeführt sein, dass nach Anbau des Anbauteils an das Gestell die Bereiche, in denen die Applikation vorgenommen werden sollen, gut einsehbar sind. Bezüglich seiner Abmessungen soll das Gestell so ausgeführt sein, dass es ohne Schwierigkeiten bewegt werden kann und beispielsweise auch problemlos in eine Beschichtungsanlage transportierbar ist. Das Gestell soll keine Störkonturen haben, die eine automatische Applikation mit dem Roboter behindern, und die Applikation soll in gleicher Weise möglich sein, wie sie auch an der Karosse durchgeführt wird.

Zur Durchführung des hier an dem Beispiel einer Karosse als Werkstück und einer Fahrzeugtür als Anbauteil beschriebenen Verfahrens wird zunächst die vollständige Karosse mit eingebauten geschlossenen Türen an einer Stelle platziert, wo sich der für die Serienapplikation der Abdichtbahnen vorgesehene Beschichtungsroboter befindet. An dieser Stelle wird die betrachtete Tür mittels eines an dem Applikator 2 des Roboters 1 (Fig. 1) befestigten und mit dem Applikationswerkzeug 9 (Fig. 2) oder 80 (Fig. 3) bewegbaren Sensor- oder Vermessungsgeräts 3 eingemessen, d. h. die genaue Ist-Position der Tür relativ zu der Karosse festgestellt. Dies geschieht in einer dem Fachmann an sich bekannten Weise.

Sodann wird die Karosse aus der Roboterstation entfernt und die betrachtete Tür von der Karosse abgebaut.

Nun wird anstelle der Karosse das Teachgestell in der Roboterstation aufgestellt und zuvor oder in der Roboterstation die von der Karosse entfernte Tür in die Halterungen des Teachgestells eingesetzt. Das Teachgestell soll so vor dem Roboter positioniert werden, dass die Tür ungefähr (etwa +/-10 mm) in der gleichen Position und Orientierung relativ zu dem Roboter steht wie zuvor in der Karosse. Zu diesem Zweck können zunächst die in Beschichtungsanlagen üblicherweise verfügbaren dreidimensionalen CAD-Daten der jeweiligen Karossengestalt verwendet werden, mit denen in Verbindung mit den Koordinaten bekannter Referenzpunkte über die Antriebssteuerungen des Teachgestells die Halterungen für die Tür entsprechend eingestellt werden können, so dass die Tür automatisch in die erforderliche Programmierungsposition gefahren wird bzw. in die bereits entsprechend eingestellten Halterungen eingesetzt werden kann.

Zur Korrektur unvermeidbarer Toleranzen wird anschließend die an dem Teachgestellt montierte Tür mit dem Sensorgerät des Roboters eingemessen, d. h. ihre genaue Ist-Position relativ zu dem Gestell festgestellt. Die Halterungen des Teachgestells können entsprechend justiert werden.

Mittels Referenzmarken des Teachgestells kann mit dem Sensorgerät des Roboters auch die Position und Orientierung des Teachgestells relativ zu dem Roboter festgestellt werden.

Statt der beschriebenen Verstellung der Halterungen mit Servomotoren besteht alternativ auch die Möglichkeit, das Teachgestell an einem in der Beschichtungsroboterstation befindlichen Hilfsroboter oder anderen mehrachsigen Manipulator anzuordnen, der das Teachgestell z. B. unter Steuerung durch die CAD-Daten der Karosse automatisch in die erforderliche Position relativ zu dem Beschichtungsroboter bringt.

Nun kann mit dem an sich üblichen Teachverfahren die erfindungsgemäß beweckte Programmierung der Applikationsbahn an dem Teachgestell durchgeführt werden.

Wie schon erwähnt wurde, kann es zur Abkürzung dieses Verfahrens sinnvoll sein, hierbei von einer Offline-Programmierung auszugehen, die zuvor beispielsweise mit einem handelsüblichen Simulations-Programmtool aufgrund des vorhandenen dreidimensionalen Datenmodells der Karosse durchgeführt wurde und durch die Teach-In-Programmierung in Feinarbeit optimiert werden kann. Bei der Teach-In-Programmierung können die Düse und der mit der Applikationsbahn abzudichtende Türflächenbereich (Bördelnaht) an allen Stellen eingesehen werden und die bei der Programmierung durchgeführte Applikation kann vollständig und genau beobachtet und analysiert werden.

Die wesentlichen Vorteile der Erfindung würden sich auch ohne vorherige Offline-Programmierung ergeben.

Nach Abschluss der Programmierung kann probeweise eine Standardbeschichtung durchgeführt werden. Zu diesem Zweck wird die Tür wieder von dem Teachgestell abgenommen und in die Karosse eingebaut, die in der Roboterstation anstelle des Teachgestells vor dem Roboter positioniert wird. Diese erste Probebeschichtung erweist sich in der Regel bereits als zufriedenstellend, so dass keine weitere Anpassung der Applikationsbahn und/oder der Applikationsparameter erforderlich ist.

Mit dem in der beschriebenen Weise erstellten Steuerprogramm werden dann bei der Serienbeschichtung mit dem vorzugsweise Fig. 1 und Fig. 2 entsprechenden Roboter die Bördelfalze der betreffenden Türen in ihrer geschlossenen Position längs der programmierten Applikationsbahn mit Abdichtmasse beschichtet. Es kann hierbei zweckmäßig sein, die Düse des Applikationswerkzeugs jeweils vor der Applikation zu reinigen, wofür geeignete (auch als Purgen bezeichnete) Methoden bekannt sind.

Das oben beschriebene Verfahren kann in gleicher Weise allgemeiner bei beliebigen sonstigen Werkstücken und Anbauteilen für die Applikation beliebiger anderer Bahnen und Beschichtungsstoffe durchgeführt werden.

## Patentansprüche

1. Verfahren zur Programmierung der Applikationsbahn eines programmierbaren mehrachsigen Beschichtungsroboters (1) für die Applikation eines Beschichtungsmaterials auf Bauteile (40) serienweise zu bearbeitender Werkstücke und zur Applikation des Beschichtungsmaterials auf Bereiche der Bauteile, die bei mindestens einer vorgegebenen Position des Bauteils an dem Werkstück von außen nicht sichtbar sind, mit den Schritten
Programmierung mindestens einer von dem Roboter (1) zu erzeugenden Applikationsbahn zur Erstellung des von ihm bei der Serienbeschichtung der Bauteile auszuführenden Steuerprogramms, wobei ein Applikationswerkzeug (9, 80) an einem mit den serienweise zu beschichtenden Bauteilen (40) übereinstimmenden Musterbauteil entlang der Applikationsbahn bewegt wird,
wobei das Musterbauteil von dem zugehörigen Werkstück entfernt ist, wenn das Applikationswerkzeug (9, 80) bei der Programmierung an dem Musterbauteil bewegt wird,
und automatische Beschichtung der in die Werkstücke eingebauten Bauteile (40) durch den von dem Steuerprogramm gesteuerten Roboter (1) in ihrer Position, in der ihre zu beschichtenden Bereiche von außen nicht sichtbar sind.

2. Verfahren nach Anspruch 1, **dadurch gekennzeichnet, dass** das Musterbauteil vor der Programmierung an einem Programmiergestell (30) montiert wird und das Applikationswerkzeug (9, 80) an dem dort montierten Bauteil bewegt wird, wobei vorzugsweise alle gemäß der Programmierung zu beschichtenden Bereiche des Bauteils für einen Programmierer sichtbar sind.

3. Verfahren nach Anspruch 2, **dadurch gekennzeichnet, dass** das Programmiergestell (30) beweglich ist und an dem Ort positioniert wird, an dem sich die Bauteile (40) bei ihrer Serienbeschichtung befinden.

4. Verfahren nach einem der vorhergehenden Ansprüche, **dadurch gekennzeichnet, dass** das Applikationswerkzeug (9) bei der Programmierung von dem bei der Serienbeschichtung verwendeten Roboter (1) an dem Musterbauteil bewegt wird.

5. Verfahren nach einem der vorhergehenden Ansprüche, **dadurch gekennzeichnet, dass** das Musterbauteil bei der Programmierung in einer Position und Orientierung angeordnet wird, in der sich die Bauteile bei der Serienbeschichtung in oder an dem Werkstück befinden.

6. Verfahren nach einem der Ansprüche 2 bis 5, **dadurch gekennzeichnet, dass** vor der an dem Programmiergestell (30) durchgeführten Programmierung mit einem fest mit dem Applikationswerkzeug (9, 80) verbundenen Vermessungsgerät (3) zunächst das Werkstück zur Feststellung der Position des zu beschichtenden Bauteils (40) relativ zu dem Werkstück und/oder das an dem Programmiergestell (30) befindliche Bauteil (40) zur Feststellung seiner Position relativ zu dem Gestell vermessen wird und die jeweiligen Messdaten gespeichert werden.

7. Verfahren nach einem der vorhergehenden Ansprüche, **dadurch gekennzeichnet, dass** die Programmierung nach einem Teach-In-Verfahren oder nach einem Playback-Verfahren erfolgt.

8. Verfahren nach einem der vorhergehenden Ansprüche, **dadurch gekennzeichnet, dass** das zu applizierende Beschichtungsmaterial ein Abdichtmaterial ist.

9. Verfahren nach einem der vorhergehenden Ansprüche, **dadurch gekennzeichnet, dass** die zu beschichtenden Bauteile Türen, Klappen oder andere Anbauteile von Fahrzeugkarossen sind.

10. Verfahren nach einem der vorhergehenden Ansprüche, **dadurch gekennzeichnet, dass** vor der Online-Programmierbewegung des Applikationswerkzeugs (9, 80) eine Offline-Programmierung der Applikationsbahn durchgeführt und das Online-Programm zur Optimierung des Offline-Programms verwendet wird.

11. Beschichtungssystem mit einer Einrichtung zur Programmierung der Applikationsbahn eines programmierbaren mehrachsigen Beschichtungsroboters (1) für die Applikation eines Beschichtungsmaterials auf Bauteile (40) serienweise zu bearbeitender Werkstücke und zur Applikation des Beschichtungsmaterials auf Bereiche der Bauteile, die bei mindestens einer vorgegebenen Position des Bauteils an dem Werkstück von außen nicht sichtbar sind,
wobei zur Programmierung mindestens einer von dem Roboter (1) zu erzeugenden Applikationsbahn ein Applikationswerkzeug (9, 80) vorgesehen ist, das an einem mit den serienweise zu beschichtenden Bauteilen (40) übereinstimmenden Musterbauteil entlang der Applikationsbahn bewegt wird,
**dadurch gekennzeichnet, dass** das Musterbauteil zur Programmierung von dem zugehörigen Werkstück entfernt ist und das Applikationswerkzeug (9, 80) bei der Programmierung an dem entfernten Musterbauteil bewegt wird,
dass ein Programmiergestell (30) vorgesehen ist, an dem das von dem Werkstück entfernte Musterbauteil bei der Programmierung montiert wird,
und dass bei der Serienbeschichtung die in die Werkstücke eingebauten Bauteile automatisch von dem Roboter in ihrer Position beschichtet werden, in der ihre zu beschichtenden Bereiche von außen nicht sichtbar sind.

12. Beschichtungssystem nach Anspruch 11, **dadurch gekennzeichnet, dass** an dem Beschichtungsroboter (1) bei der Programmierung ein mit dem Applikationswerkzeug (9, 80) bewegbares Vermessungsgerät (3) angeordnet ist.

13. Beschichtungssystem nach Anspruch 12, **dadurch gekennzeichnet, dass** das Programmiergestell (30) mit Referenzmarken versehen ist, mit denen das Vermessungsgerät (3) des Roboters (1) die Position und/oder Orientierung des Gestells relativ zu dem Roboter feststellt.

14. Beschichtungssystem nach einem der Ansprüche 11 bis 13, **dadurch gekennzeichnet, dass** das Programmiergestell (30) bewegbare Halterungen (36, 37) für das Musterbauteil und/oder Einstellvorrichtungen zum vorzugsweise stufenlosen Einstellen der Position und/oder Orientierung des an dem Gestell montierten Bauteils relativ zu dem Gestell und/oder zum vorzugsweise stufenlosen Verstellen der Halterungen zur Anpassung an unterschiedliche Musterbauteile besitzt.

15. Beschichtungssystem nach Anspruch 14, **dadurch gekennzeichnet, dass** automatisch gesteuerte Servo- oder andere Antriebe für die Einstellvorrichtungen des Bauteils (40) und/oder der Halterungen (36, 37) vorgesehen sind.

16. Beschichtungssystem nach einem der Ansprüche 11 bis 15, **dadurch gekennzeichnet, dass** Servoantriebe des Programmiergestells (30) automatisch durch gespeicherte CAD-Daten des jeweiligen Werkstücks und/oder durch gespeicherte dreidimensionale Daten der Position der Aufnahme- oder Befestigungspunkte des Bauteils (40) in dem Werkstück steuerbar sind.

17. Beschichtungssystem nach einem der Ansprüche 11 bis 16, **dadurch gekennzeichnet, dass** das Programmiergestell (30) Schnellspannverschlüsse zum schnellen An- und Abbau von Bauteilen (40) besitzt.

18. Beschichtungssystem nach einem der Ansprüche 11 bis 17, wobei an dem Programmiergestell (30) ein Musterbauteil montierbar ist, das mit serienweise mit einem programmierbaren mehrachsigen Beschichtungsroboter (1) zu beschichtenden Bauteile (40) von Werkstücken übereinstimmt, die bei der automatischen Serienbeschichtung in die Werkstücke eingebaut sind,
wobei an dem an dem Gestell (30) montierten Musterbauteil zur Programmierung mindestens einer von dem Roboter (1) zu erzeugenden Applikationsbahn ein Applikationswerkzeug entlang der Applikationsbahn bewegt wird, und wobei
das Programmiergestell (30) mit Referenzmarken versehen ist, mit denen von einem Vermessungsgerät (3) des Roboters (1) die Position und/oder Orientierung des Gestells relativ zu dem Roboter feststellbar ist, und Einstellvorrichtungen zum Einstellen der Position und/oder Orientierung des an dem Gestell montierten Bauteils relativ zu dem Gestell besitzt.

19. Beschichtungsystem nach Anspruch 18, **dadurch gekennzeichnet, dass** das Programmiergestell (30) bewegbare Halterungen (36, 37) für das Musterbauteil und/oder Einstellvorrichtungen zum Verstellen der Halterungen zur Anpassung an unterschiedliche Musterbauteile besitzt; und/oder automatisch gesteuerte Servo- oder andere Antriebe für Einstellvorrichtungen des Bauteils (40) und/oder von Halterungen (36, 37) des Gestells vorgesehen sind; und/oder Servoantriebe des Programmiergestells (30) automatisch durch gespeicherte CAD-Daten des jeweiligen Werkstücks und/oder durch gespeicherte 3-dimensionale Daten der Position der Aufnahme- oder Befestigungspunkte des Bauteils (40) in dem Werkstück steuerbar sind; und/oder
das Programmiergestell (30) Schnellspannverschlüsse zum schnellen An- und Abbau von Bauteilen (40) besitzt.

## Claims

1. A method for programming the application path of a programmable multi-axis coating robot (1) for the application of a coating material onto components (40) of work pieces to be processed in series, and for applying the coating material onto areas of the components which are not visible from the outside in at least one predetermined position of the component on the work piece, comprising the steps of
programming of at least one application path to be generated by the robot (1) to generate the control program to be executed by it in the serial coating of the components, an application tool (9, 80) being moved along the application path on a sample component corresponding to the components (40) to be coated in series,
the sample component being removed from the associated work piece when the application tool (9, 80) is moved on the sample component during the programming, and automatic coating of the components (40) mounted in the work pieces by the robot (1) controlled by the control program in their position in which their areas to be coated are not visible form the outside.

2. The method according to claim 1, **characterized in that** the sample component is mounted on a programming framework (30) prior to the programming and that the application tool (9, 80) is moved on the component mounted therein wherein preferably all the areas of the component to be coated in accordance with the programming are visible for a programmer.

3. The method according to claim 2, **characterized in that** the programming framework (30) is moveable and is positioned at that place where the components (40) are during their serial coating.

4. The method according to any one of the preceding claims, **characterized in that** the application tool (9) is moved on the sample component by the robot (1) used in the serial coating during the programming.

5. The method according to any one of the preceding claims, **characterized in that** the sample component is arranged during the programming in a position and orientation in which the components are in or on the work piece during the serial coating.

6. The method according to any one of claims 2 to 5, **characterized in that**, prior to the programming executed on the programming framework (30), the work piece to determine the position of the component (40) to be coated in relation to the work piece and/or the component (40) disposed on the programming framework (30) to determine its position in relation to the framework is initially measured with a measuring device (3) fixed to the application tool (9, 80) and the respective measurement data is stored.

7. The method according to any one of the preceding claims, **characterized in that** the programming is performed in accordance with a teach-in method or in accordance with a playback method.

8. The method according to any one of the preceding claims, **characterized in that** the coating material to be applied is a sealing material.

9. The method according to any one of the preceding claims, **characterized in that** the components to be coated are doors, lids or other attachment parts of vehicle bodies.

10. The method according to any one of the preceding claims, **characterized in that** an off-line programming of the application path is performed prior to the on-line programming movement of the application stool (9, 80) and that the on-line program is used to optimize the off-line program.

11. A coating system having means for programming the application path of a programmable multi-axis coating robot (1) for the application of a coating material onto components (40) of work pieces to be processed in series and for applying the coating material onto areas of the components which are not visible from the outside in at least one predetermined position of the component on the work piece,
wherein, to program at least one application path to be generated by the robot (1), an application tool (9, 80) is provided which is moved along the application path on a sample component corresponding to the components (40) to be coated in series,
**characterized in that** the sample component is removed from the associated work piece for the programming and the application tool (9, 80) is moved on the removed sample component during the programming,
that a programming framework (30) is provided on which the sample component removed from the work piece is mounted during the programming,
and that the components mounted in the work pieces are automatically coated by the robot during the serial coating in their position in which their areas to be coated are not visible from the outside.

12. The coating system according to claim 11, **characterized in that** a measuring device (3) moveable with the application tool (9, 80) is arranged at the coating robot (1) during the programming.

13. The coating system according to claim 12, **characterized in that** the programming framework (30) is provided with reference markers with which the measuring device (3) of the robot (1) determines the position and/or orientation of the framework in relation to the robot.

14. The coating system according to any one of claims 11 to 13, **characterized in that** the programming framework (30) has moveable holders (36, 37) for the sample component and/or setting devices to preferably continuously set the position and/or orientation of the component mounted at the framework in relation to the framework and/or to preferably continuously readjust the holders for the adjustment to different sample components.

15. The coating system according to claim 14, **characterized in that** automatically controlled servo drives or other drives for the setting devices of the component (40) and/or the holders (36, 37) are provided.

16. The coating system according to any one of claims 11 to 15, **characterized in that** servo drives of the programming framework (30) can be controlled automatically by means of stored CAD data of the respective work piece and/or by means of stored three-dimensional data of the position of holding or mounting points of the component (40) in the work piece.

17. The coating system according to one of claims 11 to 16, **characterized in that** the programming framework (30) has quick release fasteners for the fast mounting and demounting of components (40).

18. The coating system according to one of claims 11 to 17, in which a sample component can be mounted on the programming framework (30) corresponding to components (40) of work pieces to be coated in series by a programmable multi-axis robot (1) which components are mounted in the work pieces during the automatic serial coating,
an application tool being moved along the application path on the sample component mounted on the framework (30) for programming at least one application path to be generated by the robot (1), and
the programming framework (30) being provided with reference markers with which a measuring device (3) of the robot (1) can determine the position and/or orientation of the framework in relation to the robot, and setting devices for setting the position and/or orientation of the component mounted at the framework in relation to the framework.

19. The coating system according to claim 18, **characterized in that** the programming framework (30) has moveable holders (36, 37) for the sample component and/or setting devices to readjust the holders for the adjustment to different sample components; and/or automatically controlled servo drives or other drives for setting devices of the component (40) and/or of holders (36, 37) of the framework are provided; and/or servo drives of the programming framework (30) can be controlled automatically by means of stored CAD data of the respective work piece and/or by means of stored three-dimensional data of the position of holding or mounting points of the component (40) in the work piece; and/or the programming framework (30) has quick release fasteners for the fast mounting and demounting of components (40).

## Revendications

1. Procédé pour programmer la trajectoire d'application d'un robot de revêtement (1) programmable à plusieurs axes, afin d'appliquer un matériau de revêtement sur des composants (40) de pièces à traiter en série et afin d'appliquer le matériau de revêtement sur des régions des composants qui ne sont pas visibles de l'extérieur dans au moins une position prédéfinie du composant sur la pièce, comprenant les étapes suivantes programmation d'au moins une trajectoire d'application à produire par le robot (1), afin de créer le programme de commande à exécuter par le robot lors du revêtement en série des composants, sachant qu'un outil d'application (9, 80) est déplacé le long de la trajectoire d'application sur un composant type correspondant aux composants (40) à revêtir en série, sachant que le composant type est déposé de la pièce associée lorsque l'outil d'application (9, 80) est déplacé sur le composant type lors de la programmation,
et revêtement automatique, par le robot (1) commandé par le programme de commande, des composants (40) installés dans les pièces dans leur position dans laquelle leurs régions à revêtir ne sont pas visibles de l'extérieur.

2. Procédé selon la revendication 1, **caractérisé en ce que** le composant type est, avant la programmation, monté sur un bâti de programmation (30) et l'outil d'application (9, 80) est déplacé sur le composant monté sur ce bâti, sachant que, de préférence, toutes les régions à revêtir du composant d'après la programmation sont visibles pour un programmeur.

3. Procédé selon la revendication 2, **caractérisé en ce que** le bâti de programmation (30) est mobile et est positionné à l'endroit où se trouvent les composants (40) lors de leur revêtement en série.

4. Procédé selon l'une des revendications précédentes, **caractérisé en ce que** l'outil d'application (9) est, lors de la programmation, déplacé sur le composant type par le robot (1) utilisé lors du revêtement en série.

5. Procédé selon l'une des revendications précédentes, **caractérisé en ce que** le composant type est, lors de la programmation, disposé dans une position et une orientation dans lesquelles se trouvent les composants dans ou sur la pièce lors du revêtement en série.

6. Procédé selon l'une des revendications 2 à 5, **caractérisé en ce que**, avant la programmation effectuée sur le bâti de programmation (30), avec un appareil de mesurage (3) fixement relié à l'outil d'application (9, 80), on mesure d'abord la pièce afin de déterminer la position du composant (40) à revêtir par rapport à la pièce et/ou l'on mesure le composant (40) se trouvant sur le bâti de programmation (30) afin de déterminer sa position par rapport au bâti, et les données de mesure respectives sont enregistrées.

7. Procédé selon l'une des revendications précédentes, **caractérisé en ce que** la programmation s'effectue selon une méthode d'apprentissage ou selon une méthode à mémoire.

8. Procédé selon l'une des revendications précédentes, **caractérisé en ce que** le matériau de revêtement à appliquer est un matériau d'étanchéité.

9. Procédé selon l'une des revendications précédentes, **caractérisé en ce que** les composants à revêtir sont des portes, des hayons ou autres composants rapportés de carrosseries de véhicules.

10. Procédé selon l'une des revendications précédentes, **caractérisé en ce que**, avant le mouvement de programmation en ligne de l'outil d'application (9, 80), on effectue une programmation hors ligne de la trajectoire d'application et le programme en ligne est utilisé pour optimiser le programme hors ligne.

11. Système de revêtement avec un dispositif pour programmer la trajectoire d'application d'un robot de revêtement (1) programmable à plusieurs axes, afin d'appliquer un matériau de revêtement sur des composants (40) de pièces à traiter en série et afin d'appliquer le matériau de revêtement sur des régions des composants qui ne sont pas visibles de l'extérieur dans au moins une position prédéfinie du composant sur la pièce,
sachant qu'il est prévu, pour la programmation d'au moins une trajectoire d'application à produire par le robot (1), un outil d'application (9, 80) qui est déplacé le long de la trajectoire d'application sur un composant type correspondant aux composants (40) à revêtir en série, **caractérisé en ce que** le composant type est déposé de la pièce associée pour la programmation et l'outil d'application (9, 80) est, lors de la programmation, déplacé sur le composant type déposé,
**en ce qu'**il est prévu un bâti de programmation (30) sur lequel le composant type déposé de la pièce est monté lors de la programmation,
et **en ce que**, lors du revêtement en série, les composants installés dans les pièces sont automatiquement revêtus par le robot dans leur position dans laquelle leurs régions à revêtir ne sont pas visibles de l'extérieur.

12. Système de revêtement selon la revendication 11, **caractérisé en ce qu'**un appareil de mesurage (3) mobile avec l'outil d'application (9, 80) est disposé sur le robot de revêtement (1) lors de la programmation.

13. Système de revêtement selon la revendication 12, **caractérisé en ce que** le bâti de programmation (30) est pourvu de repères de référence au moyen desquels l'appareil de mesurage (3) du robot (1) détermine la position et/ou l'orientation du bâti par rapport au robot.

14. Système de revêtement selon l'une des revendications 11 à 13, **caractérisé en ce que** le bâti de programmation (30) possède des supports mobiles (36, 37) pour le composant type et/ou des dispositifs de réglage pour régler de préférence en continu la position et/ou l'orientation du composant monté sur le bâti par rapport au bâti, et/ou pour déplacer de préférence en continu les supports afin de s'adapter à différents composants types.

15. Système de revêtement selon la revendication 14, **caractérisé en ce qu'**il est prévu des servo-entraînements ou autres entraînements à commande automatique pour les dispositifs de réglage du composant (40) et/ou des supports (36, 37).

16. Système de revêtement selon l'une des revendications 11 à 15, **caractérisé en ce que** des servo-entraînements du bâti de programmation (30) peuvent être commandés automatiquement par des données mémorisées de CAO de la pièce respective et/ou par des données mémorisées à trois dimensions de la position des points de réception ou de fixation du composant (40) dans la pièce.

17. Système de revêtement selon l'une des revendications 11 à 16, **caractérisé en ce que** le bâti de programmation (30) possède des fermetures à serrage rapide pour le montage et le démontage rapides de composants (40).

18. Système de revêtement selon l'une des revendications 11 à 17, sachant qu'un composant type peut être monté sur le bâti de programmation (30), composant qui correspond à des composants (40) de pièces à revêtir en série par un robot de revêtement (1) programmable à plusieurs axes, lesdits composants étant installés dans les pièces lors du revêtement automatique en série,
sachant que, afin de programmer au moins une trajectoire d'application à produire par le robot (1), un outil d'application est déplacé le long de la trajectoire d'application sur le composant type monté sur le bâti (30),
et sachant que le bâti de programmation (30) est pourvu de repères de référence au moyen desquels un appareil de mesurage (3) du robot (1) peut déterminer la position et/ou l'orientation du bâti par rapport au robot, et possède des dispositifs de réglage pour régler la position et/ou l'orientation du composant monté sur le bâti par rapport au bâti.

19. Système de revêtement selon la revendication 18, **caractérisé en ce que** le bâti de programmation (30) possède des supports mobiles (36, 37) pour le composant type et/ou des dispositifs de réglage pour déplacer les supports afin de s'adapter à différents composants types ;
et/ou des servo-entraînements ou autres entraînements à commande automatique sont prévus pour des dispositifs de réglage du composant (40) et/ou de supports (36, 37) du bâti ;
et/ou des servo-entraînements du bâti de programmation (30) peuvent être commandés automatiquement par des données mémorisées de CAO de la pièce respective et/ou par des données mémorisées à trois dimensions de la position des points de réception ou de fixation du composant (40) dans la pièce ;
et/ou le bâti de programmation (30) possède des fermetures à serrage rapide pour le montage et le démontage rapides de composants (40).
